# FASCICULE DE BREVET EUROPEEN

(11) **EP 1 938 438 B1**
(45) Date de publication et mention de la délivrance du brevet: **02.01.2013**
(21) Numéro de dépôt: 06820299.3
(22) Date de dépôt: 17.10.2006
(51) Int. Cl.: H02J 7/00, B60L 11/18

(54) **POSTE DE RECHARGE ET VEHICULE ELECTRIQUE ASSOCIE**
AUFLADESTATION UND DIESBEZÜGLICHES ELEKTRISCHES FAHRZEUG
RECHARGING STATION AND RELATED ELECTRIC VEHICLE

(30) Priorité: 17.10.2005 FR 0510574
(43) Date de publication de la demande: 02.07.2008
(73) Titulaire: PVI, 77220 Tournan (FR)
(72) Inventeur: MIDROUILLET, Pierre, F-91250 St Germain Les Corbeil (FR); SIRIER, Denis, F-77390 Guignes (FR)
(74) Mandataire: Balesta, Pierre
(86) Numéro de dépôt international: PCT/FR2006/051038
(87) Numéro de publication internationale: WO 2007/045792

(56) Documents cités:
- US-A- 6 104 160
- US-A- 6 157 162
- RUFER A ET AL: "Sequential supply for electrical transportation vehicles: properties of the fast energy transfer between supercapacitive tanks" CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003, CONFERENCE RECORD OF THE IEEE INDUSTRY APPLICATIONS CONFERENCE. IAS ANNUAL MEETING, NEW YORK, NY : IEEE, US, vol. VOL. 3 OF 3. CONF. 38, 12 octobre 2003 (2003-10-12), pages 1530-1537, XP010676198 ISBN: 0-7803-7883-0

## Description

La présente invention concerne le domaine des véhicules « propres » et plus particulièrement celui des véhicules électriques.

Elle concerne notamment, mais pas exclusivement, le domaine des transports urbains légers, tels les bus électriques ou les tramways.

Le présent exposé concerne plus précisément un poste de recharge d'un véhicule électrique alimenté par des moyens de stockage d'énergie, ledit véhicule étant destiné à effectuer un trajet passant par un point où est situé le poste de recharge, ledit poste comportant des moyens de recharge aptes à recharger les moyens de stockage du véhicule électrique lorsque ce dernier est à proximité du poste.

Selon le présent exposé, le poste de recharge est distinct du véhicule électrique.

Parmi les véhicules électriques, on connaît déjà des bus urbains électriques ayant des moteurs alimentés par des moyens de stockage disposés dans le bus.

Les moyens de stockage de certains de ces véhicules sont constitués uniquement par des batteries aptes à être rechargées par un chargeur lui-même monté dans le bus.

Les batteries ces dernières présentant les inconvénients d'être coûteuses, d'avoir une durée de vie limitée et de présenter un ratio « puissance fournie/poids de la batterie » faible.

Il en résulte que les bus électriques connus sont le plus souvent de petite taille et destinés à transporter une quarantaine de personnes, tout en restant très coûteux, ce qui nuit à leur développement.

Ces bus urbains électriques effectuent le plus souvent des trajets entre une station de départ et une station d'arrivée tout en desservant une pluralité de stations d'arrêt situées entre les stations de départ et d'arrivée, ces trajets étant généralement bouclés de telle sorte que la station de départ correspond à la station d'arrivée, appelée « terminus ».

Ce terminus accueille généralement le poste de recharge destiné à recharger les moyens de stockage des bus, lorsque ces derniers sont retournés au terminus après avoir effectué leur trajet.

Le poste de recharge connu comporte un câble électrique relié à un réseau électrique spécifique apte à fournir au chargeur du bus une très haute puissance (de l'ordre de 120 000 Watts), de telle sorte que le chargeur puisse charger les batteries en quelques minutes.

Il existe toutefois des circonstances dans lesquelles il peut être avantageux de recharger les moyens de stockage plus rapidement, par exemple dans les cas dans lesquels le temps d'arrêt d'un bus électrique au poste de recharge ne doit pas excéder la durée de montée et descente des passagers, à savoir environ une trentaine de secondes.

Parmi l'état de l'art connu, Rufer & al. décrivent dans l'article "Sequential Supply for Electrical Transportation Vehicles : Properties of the fast energy transfer between supercapacitive tanks" une installation comprenant les caractéristiques du préambule de la revendication 1 annexée. En outre, EP 1 473 819 présente un véhicule électrique présentant les caractéristiques du préambule de la revendication 7.

Le présent exposé concerne un poste de recharge permettant de diminuer le temps de recharge des moyens de stockage du véhicule.

Dans un tel poste de recharge, les moyens de recharge comprennent un dispositif de stockage apte à stocker de l'énergie électrique fournie par une source d'énergie électrique, des moyens de connexion pour connecter électriquement le dispositif de stockage du poste avec les moyens de stockage du véhicule et transférer l'énergie stockée dans le dispositif de stockage du poste vers les moyens de stockage du véhicule électrique, le dispositif de stockage comprenant de manière avantageuse un condensateur.

On comprend qu'au moment où le véhicule s'arrête à proximité du poste, l'énergie nécessaire au véhicule est déjà stockée dans le dispositif de stockage du poste, si bien que le transfert vers les moyens de stockage est effectué en quelques secondes seulement.

Autrement dit, lorsque le véhicule électrique est à proximité du poste de recharge selon le présent exposé, on connecte électriquement le dispositif de stockage du poste de recharge avec les moyens de stockage du véhicule et l'on transfère l'énergie stockée dans le dispositif de stockage du poste vers les moyens de stockage du véhicule électrique.

On conçoit alors que la durée nécessaire pour transférer l'énergie électrique depuis le dispositif de stockage du poste de recharge selon le présent exposé vers les moyens de stockage du véhicule est sensiblement plus faible que pour les véhicules connus pour lesquels il est nécessaire de recharger les batteries à l'aide d'un chargeur relié à un réseau de forte puissance.

Avantageusement, le poste de recharge comprend en outre des moyens pour recharger le dispositif de stockage lorsque le véhicule n'est pas à proximité du poste.

Pendant la période au cours de laquelle le véhicule n'est pas à proximité du poste, le dispositif de stockage du poste de recharge selon le présent exposé emmagasine avantageusement de l'énergie électrique fournie par la source d'énergie électrique.

Ainsi, contrairement aux postes de recharge connus, on profite avantageusement de la période au cours de laquelle le véhicule n'est pas à proximité du poste pour stocker de l'énergie électrique dans le dispositif de stockage.

Par ailleurs, dans les postes de recharge déjà connus, comme on l'a déjà mentionné ci-dessus, il est nécessaire d'utiliser un réseau électrique spécifique apte à fournir une puissance importante, ce qui nécessite généralement des travaux de voirie importants afin d'amener des câbles à forte puissance jusqu'au poste de recharge connu.

Au contraire, la source d'énergie électrique apte à fournir de l'énergie électrique au dispositif de stockage du poste selon le présent exposé est avantageusement un réseau de basse puissance, tel par exemple le réseau urbain électrique.

En effet, contrairement à la durée de recharge des moyens de stockage du véhicule, il n'est pas nécessaire que la durée de charge du dispositif de stockage du poste soit particulièrement rapide, si bien que la puissance du réseau électrique urbain est suffisante.

Comme le réseau électrique urbain est généralement facilement accessible, le poste de recharge selon le présent exposé permet de s'affranchir d'importants travaux de voirie et, par suite, de rendre l'utilisation de véhicules électriques moins coûteuse.

Avantageusement, les moyens de connexion du poste de recharge comportent un dispositif de sécurité apte à permettre le transfert d'énergie uniquement lorsque le poste est correctement connecté au véhicule.

Comme le transfert d'énergie est particulièrement rapide, il convient de s'assurer que le poste de recharge est correctement connecté au véhicule avant de procéder au transfert d'énergie, notamment afin d'éviter l'apparition d'arcs électriques qui pourraient endommager les moyens de connexion.

De manière avantageuse, le condensateur présente une grande capacité.

Le condensateur est par exemple une super-capacité, celle-ci étant déjà connue par ailleurs.

La super-capacité présente l'avantage de pouvoir stocker une importante quantité d'énergie.

Préférentiellement, on dimensionne le condensateur afin qu'il puisse stocker l'énergie suffisante pour recharger les moyens de stockage du véhicule.

En l'espèce, on prévoit que le condensateur ait une capacité de plusieurs dizaines de farads.

Lorsque le véhicule électrique est un bus, le poste de recharge est avantageusement fixé à une station d'arrêt du bus.

La présente invention concerne une installation comprenant les caractéristiques de la revendication 1 annexée. Elle comprend notamment une pluralité de postes de recharge selon le présent exposé, lesdits postes étant disposés le long du trajet du véhicule et les moyens de connexion de chacun des postes étant aptes à transférer la quantité d'énergie suffisante pour que le véhicule puisse aller au moins jusqu'au poste suivant.

Ainsi, grâce à la présente invention, les moyens de stockage du véhicule peuvent avantageusement être rechargés à plusieurs endroits du trajet du véhicule.

Lorsque le véhicule est un bus électrique urbain, chacun des postes de recharge de l'installation est avantageusement fixé à une station d'arrêt du bus et l'on profite avantageusement du temps de descente et montée des passagers lors de l'arrêt à la station pour transférer l'énergie stockée dans le dispositif de stockage du poste vers les moyens de stockage du bus électrique.

Dès lors, l'installation selon l'invention permet que le véhicule ne soit pas immobilisé spécialement pour procéder à sa recharge.

On comprend donc que grâce à l'invention, le véhicule électrique présente une autonomie quasiment infinie car il n'est plus nécessaire de s'arrêter spécialement pour recharger entièrement les moyens de stockage du véhicule, ceux-ci étant rechargés plusieurs fois tout au long du parcours du véhicule.

La présente invention concerne également un véhicule électrique comportant les caractéristiques de la revendication 7 annexée. Il comprend notamment des moyens de stockage d'énergie électrique, un moteur électrique alimenté par l'énergie stockée dans les moyens de stockage, lesdits moyens de stockage d'énergie étant aptes à être rechargés par un poste de recharge selon le présent exposé, le véhicule comportant en outre des moyens de connexion pour connecter les moyens de stockage du véhicule avec les moyens de connexion du poste lorsque le véhicule est à proximité dudit poste.

En outre, comme on l'a déjà expliqué ci-dessus, le temps de recharge du véhicule selon l'invention est plus rapide que celui des véhicules connus, du fait que la quantité d'énergie à transférer est déjà contenue dans le poste de recharge au moment où la phase de recharge débute.

Lorsque ce véhicule est utilisé dans une installation selon l'invention, telle que mentionnée ci-dessus, le véhicule est fréquemment rechargé.

Un premier intérêt est de pouvoir diminuer la capacité des moyens de stockage du véhicule par rapport à celle des véhicules électriques déjà connus, afin notamment de réduire le coût du véhicule.

Un autre intérêt est de ne pas diminuer la capacité des moyens de stockage mais plutôt d'augmenter la taille du véhicule, afin de pouvoir transporter davantage de personnes.

Avantageusement, les moyens de stockage du véhicule comportent un condensateur.

Ainsi, le moteur du véhicule selon l'invention est alimenté par un condensateur, qui présente notamment l'avantage de pouvoir être rechargé beaucoup plus rapidement qu'une batterie.

Aussi, le condensateur présente avantageusement une durée de vie supérieure à celle d'une batterie subissant de nombreux cycles de décharge complète suivie d'une recharge.

En effet, il est connu que la durée de vie d'une batterie est inversement proportionnelle à sa profondeur de décharge.

On conçoit que l'augmentation de la durée de vie des moyens de stockage permet encore de réduire le coût du véhicule selon l'invention.

Selon l'invention, on utilise de préférence un type de condensateur présentant une grande capacité, telle par exemple une super-capacité.

De manière préférentielle, le condensateur présente une capacité comprise entre 20 et 50 farads.

Comme la capacité de stockage d'un condensateur est généralement inférieure à celle d'une batterie, il est peut être nécessaire de recharger plusieurs fois le véhicule au cours de son trajet, comme le propose l'installation mentionnée ci-dessus.

Comme le poste de recharge comporte également un condensateur, on comprend que le fait de disposer de deux condensateurs, l'un étant dans le poste de recharge selon le présent exposé et l'autre dans le véhicule selon l'invention, permet avantageusement un transfert d'énergie très rapide.

Avantageusement, les moyens de stockage comportent en outre un accumulateur, telle par exemple une batterie rechargeable du type nickel-cadmium.

Selon l'invention, l'accumulateur est destiné à suppléer le condensateur dès lors que ce dernier ne contient plus l'énergie suffisante pour alimenter le moteur, par exemple dans le cas où le trajet effectivement réalisé est plus long que celui initialement prévu.

Autrement dit, le véhicule selon l'invention combine les avantages du condensateur et de l'accumulateur, à savoir respectivement la rapidité de transfert d'énergie et la forte capacité de stockage d'énergie.

L'accumulateur est relié au condensateur du véhicule par l'intermédiaire d'un dispositif réversible de transfert d'énergie.

Ce dispositif permet de transférer de l'énergie entre l'accumulateur et le condensateur d'une façon bidirectionnelle, c'est-à-dire que le condensateur est apte à recharger l'accumulateur lorsqu'il existe un surplus d'énergie dans le condensateur et, inversement, l'accumulateur est apte à recharger le condensateur lorsque l'énergie disponible dans le condensateur n'est plus suffisante pour alimenter le moteur électrique.

Le condensateur peut présenter un surplus d'énergie par exemple dans le cas où le véhicule descend une pente, ou bien dans le cas où un frein moteur est actionné. Dans cette situation, on comprend que le moteur électrique fonctionne en générateur produisant un courant qui est avantageusement récupéré et stocké dans le condensateur puis, éventuellement, dans l'accumulateur.

On conçoit donc que l'accumulateur fonctionne avantageusement tel un réservoir tampon d'énergie pour le condensateur.

De manière avantageuse, les moyens de connexion du véhicule comportent un bras extensible apte à venir se connecter avec les moyens de connexion du poste.

Dès lors, la connexion entre le véhicule et le poste est réalisée de manière automatique et non plus manuelle comme dans les véhicules connus déjà mentionnés ci-dessus.

Un avantage est d'éviter que l'opérateur, à savoir généralement le conducteur, ne s'électrocute lors de la connexion ou, à tout le moins, de lui éviter l'effort physique résultant de la manipulation du câble de connexion mentionné ci-dessus.

Le présent exposé concerne enfin un procédé de recharge d'un véhicule électrique, dans lequel on fournit un véhicule électrique ayant un moteur électrique alimenté par des moyens de stockage d'énergie, un poste de recharge distinct du véhicule et ayant un condensateur pour stoker l'énergie électrique, le procédé étant tel que lorsque le véhicule est à proximité du poste de recharge, on connecte électriquement le véhicule au poste de recharge, on transfère l'énergie électrique stockée dans le condensateur du poste vers le condensateur du véhicule, on déconnecte le véhicule du poste de recharge, avant de recharger le dispositif de stockage du poste de recharge.

D'autres caractéristiques et avantages de l'invention apparaîtront mieux à la lecture de la description qui suit d'un mode de réalisation de l'invention donné à titre d'exemple non limitatif.

La description se réfère aux figures annexées sur lesquelles :
- la figure **1** est une vue en perspective du véhicule électrique selon l'invention arrêté à proximité du poste de recharge selon le présent exposé ; et
- la figure **2** représente le schéma électrique simplifié du véhicule électrique lorsqu'il est connecté au poste de recharge.

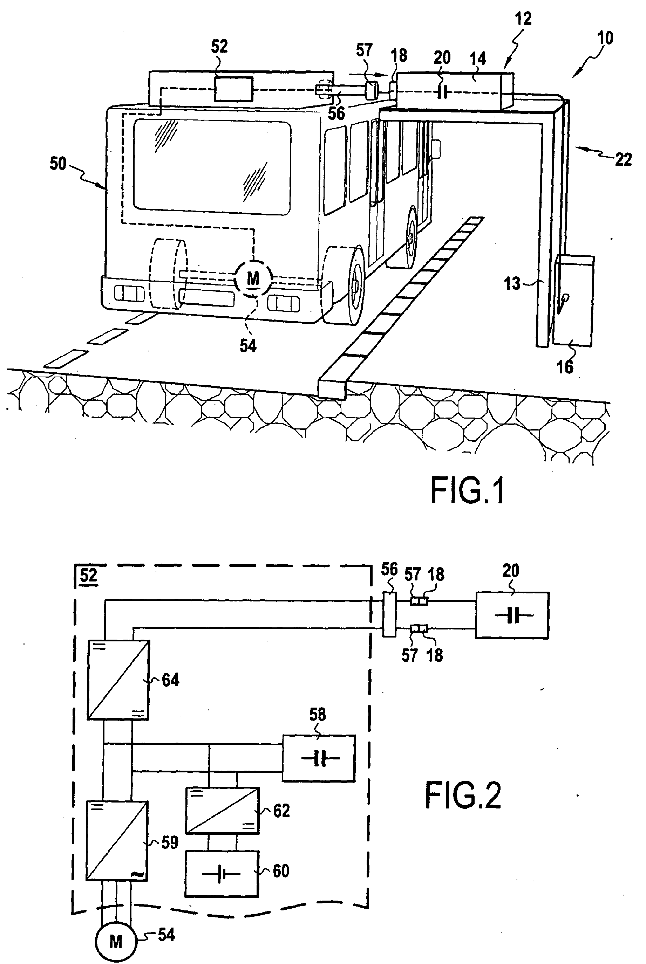

Sur la figure **1****,** on a représenté un poste de recharge **10** selon le présent exposé apte à recharger un véhicule électrique **50** selon l'invention.

De manière préférentielle, le véhicule électrique **50** est un bus électrique **50** destiné à transporter des passagers sur un trajet le long duquel est disposée au moins une station d'arrêt **13**.

Dans l'exemple représenté sur la figure **1**, le bus **50** peut être notamment un bus urbain électrique apte à transporter une centaine de passagers.

Le bus **50** selon l'invention est propulsé par un moteur électrique, par exemple un moteur électrique triphasé **54**, alimenté par des moyens de stockage d'énergie électrique **52** que l'on a représentés plus en détail sur la figure **2****.**

De manière préférentielle, le moteur électrique est un moteur triphasé apte à délivrer une puissance comprise entre 100 et 200 kilowatts.

Ces moyens de stockage **52** comportent avantageusement un condensateur **58** du type super-capacité, dont la capacité est comprise entre 20 et 50 farads, de préférence environ 30 farads.

Le condensateur **58** du bus **50** est notamment prévu pour fonctionner à une tension comprise entre 400 et 800 Volts, de préférence 600 Volts.

Comme on le voit sur la figure **2**, le condensateur **58** alimente le moteur électrique triphasé **54** par l'intermédiaire d'un convertisseur courant continu/courant alternatif triphasé **59**, tel par exemple un onduleur 59 pouvant être du type à contrôle vectoriel de flux.

Les moyens de stockage **52** comportent en outre un accumulateur **60**, comme par exemple une batterie au nickel-cadmium.

Selon l'invention, l'accumulateur **60** est relié au condensateur **58** par l'intermédiaire d'un dispositif réversible de transfert d'énergie **62**, qui comprend un convertisseur bidirectionnel courant continu/courant continu du type hacheur DC/DC.

Ce dispositif de transfert d'énergie **62** comprend des moyens pour commander le sens du transfert du courant entre le condensateur **58** et l'accumulateur **60**, notamment en fonction de la quantité d'énergie contenue dans le condensateur **58**.

En l'espèce, lorsque la quantité d'énergie contenue dans le condensateur dépasse un premier seuil (seuil haut) prédéterminé, le dispositif de transfert **62** permet au condensateur **58** de décharger le surplus d'énergie dans l'accumulateur **60** afin de stocker de manière avantageuse ce surplus d'énergie au lieu qu'il soit dissipé.

Ce surplus d'énergie apparaît par exemple lorsque le bus descend une pente. Dans ce cas, le bus est mis en mouvement grâce à la force de pesanteur si bien que le moteur est entraîné par la rotation des roues de telle sorte que le moteur fonctionne en générateur.

Le courant alternatif ainsi généré est converti en courant continu par le convertisseur **59** avant d'être transféré vers le condensateur.

On comprend donc que si le condensateur est à ce moment déjà substantiellement chargé, alors cette énergie provenant du moteur fonctionnant en générateur constitue un surplus d'énergie, que l'on stocke avantageusement dans l'accumulateur **60**.

Par ailleurs, le surplus d'énergie peut également apparaître des lors qu'un frein moteur est actionné.

Inversement, lorsque la quantité d'énergie contenue dans le condensateur est inférieure à un second seuil (seuil bas) prédéterminé, le dispositif de transfert **62** permet à l'accumulateur **60** de recharger le condensateur **58**.

Cette situation peut se produire lorsque le bus effectue un long trajet de telle sorte que l'énergie stockée dans le condensateur **58** n'est pas suffisante pour alimenter le moteur pendant toute la durée du trajet.

Dans ce cas, dès que la quantité d'énergie stockée dans le condensateur **58** devient inférieure au seuil bas, l'accumulateur supplée le condensateur en fournissant l'énergie nécessaire au fonctionnement du moteur **54.**

Pour permettre la recharge du bus **50**, le condensateur **58** est relié à des moyens de connexion **56** destinés à réaliser la connexion électrique entre le bus **50** et le poste **10** lors de la phase de recharge du bus.

Lorsque le courant circulant entre le poste de recharge et le véhicule est important, c'est-à-dire de l'ordre de plusieurs centaines d'ampères, il est nécessaire de prévoir des moyens de couplage électrique **64** disposés entre les moyens de connexion **56** et le condensateur **58** afin de pouvoir coupler électriquement le condensateur à un dispositif de stockage d'énergie **20** du poste de recharge **10** selon le présent exposé.

Ces moyens de couplage **64** évitent notamment l'apparition d'arcs électriques au moment de la connexion électrique entre le bus et du poste de recharge.

De manière préférentielle, ces moyens de couplage électrique **64** comprennent un convertisseur unidirectionnel courant continu/courant continu du type hacheur DC/DC.

Comme on le voit sur la figure **1**, les moyens de connexion **56** du bus se présentent préférentiellement sous la forme d'un bras extensible disposé sur le toit du bus et dont une extrémité est muni d'un connecteur électrique **57** apte à coopérer avec un connecteur électrique **18** du poste de recharge de manière à réaliser la connexion électrique et permettre le transfert d'énergie entre le bus et le poste de recharge.

Selon une autre variante (non représentée ici), les moyens de connexion peuvent se présenter sous la forme d'un bras articulé.

Quelle que soit la variante considérée, le bras est destiné à se déployer vers le poste de recharge **10** lors de la phase de recharge et à se rétracter lorsque cette phase est terminée.

Bien que cela ne soit pas représenté ici, on peut prévoir que les moyens de stockage d'énergie **52** alimentent des actionneurs électriques ou autres servitudes, tels par exemple des moteurs d'essuie-glace, des moyens d'ouverture des portes, des lampes d'éclairage ou tout autre actionneur que l'on trouve généralement dans les bus urbains.

On va maintenant décrire plus en détail le poste de recharge **10** selon le présent exposé.

Comme on le voit sur la figure **1**, le poste de recharge **10** comporte des moyens de recharge **12** disposés préférentiellement sur un toit d'une station d'arrêt **13** du bus **50**, cette station d'arrêt, du type abris-bus, étant située au bord d'une chaussée.

Toutefois, sans sortir du cadre du présent exposé, le poste de recharge **10** peut tout aussi bien être fixé au sommet d'un mât disposé au bord de la chaussée.

Ces moyens de recharge **12** sont destinés à recharger les moyens de stockage **52** du bus électrique **50** lorsque ce dernier est en face du poste **10.**

De manière préférentielle, la recharge des moyens de stockage s'effectue lorsque le bus **50** est immobilisé à proximité du poste **10**.

Les moyens de recharge **12** du poste **10** comportent un dispositif de stockage **14** comprenant avantageusement un condensateur **20** du type super-capacité.

En l'espèce, la capacité du condensateur **20** est comprise entre 10 et 30 farads, de préférence environ 20 farads.

En outre, le condensateur **20** du poste de recharge est prévu pour fonctionner à une tension comprise entre 400 et 800 volts, de préférence 600 volts.

Le condensateur **20** est quant à lui relié électriquement à une source d'énergie **16** pour sa recharge, d'une part et à des moyens de connexion **18** fixés au dispositif de recharge, d'autre part.

Les moyens de connexion **18** du poste **10** s'étendent vers la chaussée et sont, par ailleurs, destinés à coopérer avec les moyens de connexion **56** du bus **50** afin de réaliser la connexion électrique entre le bus **50** et le poste **10** lors de la phase de recharge.

Conformément à l'invention, la connexion entre le bus **50** et le poste **10** lors de la phase de recharge peut être réalisée avec ou sans contact entre les moyens de connexion du bus et ceux du poste.

De manière préférentielle, les moyens de connexion **18** du poste comprennent un connecteur électrique apte à recevoir le connecteur électrique **57** du bus **50.**

On peut toutefois prévoir une connexion par induction entre le bus **50** et le poste **10.** Un avantage de la connexion par induction est de pouvoir encore accélérer le transfert d'énergie entre le poste de recharge **10** et le bus **50** en s'affranchissant d'une connexion physique entre le bus et le poste.

Dès lors, on comprend que lors de la phase de recharge, on connecte ensemble les deux condensateurs, à savoir celui des moyens de stockage **52** du bus **50** et celui du dispositif de stockage du poste de recharge **10**.

Le dispositif de couplage **64** qui est disposé entre les deux condensateurs permet avantageusement d'éviter qu'un arc électrique ne se forme lors de la connexion physique entre les moyens de connexion.

Par ailleurs, comme on le constate sur la figure **1**, la connexion physique entre les moyens de connexion se réalise à une hauteur sensiblement égale à la hauteur du bus de telle manière que les passagers, montant ou descendant du bus, ne peuvent pas être en contact avec les moyens de connexion, ceci afin d'éviter tout risque d'électrocution.

Selon l'invention, l'intensité du courant qui est transféré entre le condensateur **20** du poste de recharge et le dispositif de couplage est avantageusement de l'ordre de 500 ampères de manière à pouvoir recharger les moyens de stockage du véhicule en **5** à **20** secondes.

Tel qu'on l'a représenté sur la figure **1**, le condensateur **20** est relié à un réseau électrique basse puissance tel par exemple le réseau électrique urbain, par l'intermédiaire d'un convertisseur courant alternatif/courant continu (non représenté ici) de sorte que le condensateur **20** puisse être chargé par la source d'énergie **16**.

De manière préférentielle, la source d'énergie **16** est apte à fournir une puissance comprise entre 6 et 12 kilowatts.

On va maintenant décrire plus en détail le principe de fonctionnement d'une installation selon l'invention comprenant au moins un véhicule électrique selon l'invention, tel le bus urbain **50** décrit ci-dessus ainsi qu'une pluralité de stations d'arrêt **13**, chacune des stations d'arrêt étant munie d'un poste de recharge **10** selon le présent exposé.

La séquence est la suivante : le bus **50** transportant des passagers s'immobilise en face de la station d'arrêt **13** puis, pendant que les portes s'ouvrent et que les passagers descendent tandis que d'autres montent, le bras **56** se déploie depuis le toit du bus vers celui de la station d'arrêt pour venir se connecter avec les moyens de connexion **18** du poste de recharge **10** afin de permettre le transfert d'énergie entre le poste **10** et le bus **50**.

Généralement, le bus s'arrête entre 5 et 30 secondes pour laisser descendre et monter les passagers, tandis que la durée de transfert d'énergie dure, comme on l'a déjà indiqué ci-dessus, entre 5 et 20 secondes, si bien que le bus est avantageusement rechargé dans ce laps de temps.

Après la phase de recharge, le bras se rétracte tandis que les portes du bus se referment, avant que le bus ne démarre pour poursuivre son trajet.

De cette manière, le bus **50** peut être rechargé à chacune des stations d'arrêt **13**, avantageusement pendant la durée de montée et descente des passagers.

De manière préférentielle, on prévoit que la quantité d'énergie stockée dans le condensateur **58** du bus **50** est suffisante pour que le bus puisse aller au moins jusqu'à la station d'arrêt suivante.

Si, pour quelque raison que ce soit, le bus ne marque pas d'arrêt à la station d'arrêt suivante, l'accumulateur **60** fournit avantageusement un complément d'énergie au condensateur **58** de telle manière que ce dernier peut continuer à alimenter le moteur électrique **54** afin que le bus puisse poursuivre son trajet jusqu'à une station d'arrêt plus éloignée.

La présente invention peut également s'appliquer de manière avantageuse dans les réseaux de tramways. Elle permet en effet de prévoir des portions de réseaux s'affranchissant de caténaires, l'alimentation des moteurs des tramways étant temporairement assurée par un condensateur conforme à la présente invention.

Enfin, selon un autre aspect de l'invention, on munit le poste de recharge ou, à tout le moins, le mât sur lequel il peut être fixé, de moyens d'information tel par exemple un support publicitaire audio-visuel.

Il est également avantageux de munir le mât de moyens de communication sans fil notamment afin de mettre à jour le contenu des moyens d'information.

## Revendications

1. Installation comprenant une pluralité de postes de recharge (10) et un véhicule électrique (50) alimenté par des moyens de stockage d'énergie (52) comprenant un condensateur (58), ledit véhicule (50) étant destiné à effectuer un trajet passant par des points où sont situés les postes de recharge (10), chacun des postes (10) comportant des moyens de recharge (12) aptes à recharger les moyens de stockage (52) du véhicule électrique (50) lorsque ce dernier est à proximité dudit poste, les moyens de recharge (12) comprenant un dispositif de stockage (14) apte à stocker de l'énergie électrique fournie par une source d'énergie électrique (16), des moyens de connexion (18) pour connecter électriquement le dispositif de stockage (14) de chacun des postes (10) avec les moyens de stockage (52) du véhicule (50) et transférer l'énergie stockée dans le dispositif de stockage (14) de chacun des postes (10) vers les moyens de stockage (52) du véhicule électrique (50), lesdits postes étant disposés le long du trajet du véhicule (50), et les moyens de connexion (18) de chacun des postes (10) étant aptes à transférer la quantité d'énergie suffisante pour que le véhicule (50) puisse aller au moins jusqu'au poste suivant, l'installation étant **caractérisée en ce que** les moyens de stockage (52) du véhicule électrique (50) comprennent en outre un accumulateur (60) relié au condensateur (58) par l'intermédiaire d'un dispositif réversible de transfert d'énergie (62)..

2. Installation selon la revendication 1, **caractérisée en ce que** le dispositif de stockage (14) du poste (10) comprend un condensateur de type super-capacité (20).

3. Installation selon la revendication 1 ou 2, **caractérisée en ce que** les moyens de connexion (18) du poste (10) comportent un dispositif de sécurité apte à permettre le transfert d'énergie uniquement lorsque le poste (10) est correctement connecté au véhicule (50).

4. Installation selon l'une quelconque des revendications 1 à 3, **caractérisée en ce que** le véhicule comprend en outre des moyens de connexion (56) qui comportent un bras extensible pour venir se connecter avec les moyens de connexion (18) du poste (10) de recharge.

5. Installation selon la revendication 4, **caractérisée en ce que** le bras extensible est muni d'un connecteur électrique (57) destiné à coopérer avec un connecteur électrique (18) appartenant aux moyens de connexion du poste de recharge.

6. Installation selon l'une quelconque des revendications 1 à 5, **caractérisée en ce que** le véhicule comporte en outre des moyens de connexion (56) avec le poste de recharge, et **en ce qu'**un dispositif de couplage (64) comprenant un convertisseur unidirectionnel courant continu / courant continu du type hacheur DC/DC est disposé entre le condensateur du véhicule (58) et les moyens de connexion (56) du véhicule.

7. Véhicule électrique (50) comportant des moyens de stockage d'énergie électrique (52) qui comprennent un condensateur (58), un moteur électrique (54) alimenté par l'énergie stockée dans les moyens de stockage (52), lesdits moyens de stockage d'énergie (52) étant destinés à être rechargés par un poste de recharge (10) distinct du véhicule ayant des moyens de connexion (18), le véhicule (50) comportant en outre des moyens de connexion (56) pour connecter les moyens de stockage (52) du véhicule (50) avec les moyens de connexion (18) du poste (10) lorsque le véhicule est à proximité dudit poste (10), le véhicule étant **caractérisé en ce que** les moyens de stockage (52) du véhicule (50) comprennent en outre un accumulateur (60) relié au condensateur (58) par l'intermédiaire d'un dispositif réversible de transfert d'énergie (62), et **en ce que** le condensateur du véhicule est relié aux moyens de connexion du véhicule par l'intermédiaire d'un dispositif de couplage (64) comprenant un convertisseur unidirectionnel courant continu / courant continu du type hacheur DC/DC.

8. Véhicule électrique selon la revendication 7, caractérisé que le condensateur (56) du véhicule est de type super-capacité.

9. Véhicule électrique selon la revendication 7 ou 8, **caractérisé en ce que** le condensateur (58) du véhicule (50) est apte à recharger l'accumulateur (60).

10. Véhicule électrique selon l'une quelconque des revendications 7 à 9, **caractérisé en ce que** les moyens de connexion comportent un bras extensible (56) disposé sur le toit du véhicule.

11. Véhicule électrique selon la revendication 10, **caractérisé en ce que** le bras extensible est muni d'un connecteur électrique pour venir se connecter avec un connecteur électrique appartenant aux moyens de connexion (18) du poste (10).

12. Véhicule électrique selon l'une quelconque des revendications 7 à 11, **caractérisé en ce que** la capacité du condensateur (56) est comprise entre 20 et 50 farads.

13. Véhicule électrique selon l'une quelconque des revendications 7 à 12, **caractérisé en ce que** le condensateur est prévu pour fonctionner entre 400 et 800 volts.

## Claims

1. An installation including a plurality of recharging stations (10) and an electric vehicle (50) supplied with power by energy storage means (52) including a capacitor (58), said vehicle (50) being designed to follow a route passing by points where recharging stations (10) are located, each of the stations (10) comprising recharging means (12) capable of recharging the storage means (52) of the electric vehicle (50) when the latter is near said station, the recharging means (12) including a storage device (14) capable of storing electrical energy supplied by an electric power source (16), connection means (18) for electrically connecting the storage device (14) of each of the stations (10) with the storage means (52) of the vehicle (50) and transfer the energy stored in the storage device (14) of each of the stations (10) to the storage means (52) of the electric vehicle (50), said stations being arranged along the route of the vehicle (50), and the connection means (18) of each of the stations (10) being capable of transferring a sufficient quantity of energy for the vehicle (50) to be able to go at least as far as the following station, the installation being **characterized in that** the storage means (52) of the electric vehicle (50) also include a storage battery (60) connected to the capacitor (58) through a reversible energy transfer device (62).

2. The installation according to Claim 1, **characterized in that** the storage device (14) of the station (10) includes a capacitor of the supercapacitor type (20).

3. The installation according to Claim 1 or 2, **characterized in that** the connection means (18) of the station (10) comprise a safety device capable of allowing energy transfer only when the station (10) is correctly connected to the vehicle (50).

4. The installation according to any one of Claims 1 through 3, **characterized in that** the vehicle further comprises connection means (56) which comprise an arm that is extendable so as to connect with the connection means (18) of the recharging station (10).

5. The installation according to Claim 4, **characterized in that** the extendable arm is equipped with an electrical connector (57) designed to cooperate with an electrical connector (18) belonging to the recharging station.

6. The installation according to any one of Claims 1 through 5, **characterized in that** the vehicle also comprises means (56) for connecting with the recharging station, and **in that** a coupling device (64) including a unidirectional DC-to-DC converter of the DC-to-DC chopper type is placed between the capacitor (58) of the vehicle and the connection means (56) of the vehicle.

7. Electric vehicle (50) comprising electrical energy storage means (52) which include a capacitor (58), an electric motor (54) supplied with power by the energy stored in the storage means (52), said energy storage means (52) being designed to be recharged by a recharging station (10) distinct from the vehicle having connection means (18), the vehicle (50) also comprising connection means (56) for connecting the storage means (52) of the vehicle (50) with the connection means (18) of the station (10) when the vehicle is near said station (10), the vehicle being **characterized in that** the storage means (52) of the vehicle (50) also include a storage battery (60) connected to the capacitor (58) through a reversible energy transfer device (62), and **in that** the capacitor of the vehicle is connected to the connection means of the vehicle through a coupling device (64) including a unidirectional DC-to-DC converter of the DC-to-DC chopper type.

8. The electric vehicle according to Claim 7, **characterized in that** the capacitor (56) of the vehicle is of the super-capacitor type.

9. The electric vehicle according to Claim 7 or 8, **characterized in that** the capacitor (58) of the vehicle (50) is capable of recharging the storage battery (60).

10. The electric vehicle according to any one of Claims 7 through 9, **characterized in that** the connection means comprise an extendable arm (56) positioned on the roof of the vehicle.

11. The electric vehicle according to Claim 10, **characterized in that** the extendable arm is equipped with an electrical connector for connecting with an electrical connector belonging to the connection means (18) of the station (10).

12. The electric vehicle according to any one of Claims 7 through 11, **characterized in that** the capacitance of the capacitor (56) is comprised between 20 and 50 farads.

13. The electric vehicle according to any one of Claims 7 through 12, **characterized in that** the capacitor is designed to operate between 400 and 800 volts.

## Patentansprüche

1. Anlage, umfassend eine Vielzahl von Aufladestationen (10) und ein Elektrofahrzeug (50), das durch Energiespeichermittel (52), die einen Kondensator (58) umfassen, gespeist wird, wobei das Fahrzeug (50) dazu bestimmt ist, eine Strecke zurückzulegen, die an Punkten vorbeiläuft, an denen die Aufladestationen (10) gelegen sind, wobei eine jede der Stationen (10) Auflademittel (12) umfaßt, die geeignet sind, die Speichermittel (52) des Elektrofahrzeugs (50) aufzuladen, wenn letzteres sich in der Nähe der Station befindet, wobei die Auflademittel (12) eine Speichervorrichtung (14) umfassen, die geeignet ist, durch eine Quelle für elektrische Energie (16) gelieferte elektrische Energie zu speichern, Verbindungsmittel (18), um die Speichervorrichtung (14) einer jeden der Stationen (10) mit den Speichermitteln (52) des Fahrzeugs (50) elektrisch zu verbinden und um die in der Speichervorrichtung (14) einer jeden der Stationen (10) gespeicherte Energie zu den Speichermitteln (52) des Elektrofahrzeugs (50) zu übertragen, wobei die Stationen entlang der Strecke des Fahrzeugs (50) angeordnet sind und wobei die Verbindungsmittel (18) einer jeden der Stationen (10) geeignet sind, die ausreichende Energiemenge zu übertragen, damit das Fahrzeug (50) wenigstens bis zur nächsten Station fahren kann, wobei die Anlage **dadurch gekennzeichnet ist, daß** die Speichermittel (52) des Elektrofahrzeugs (50) ferner einen Akkumulator (60) umfassen, der über eine reversible Vorrichtung zur Energieübertragung (62) mit dem Kondensator (58) verbunden ist.

2. Anlage nach Anspruch 1, **dadurch gekennzeichnet, daß** die Speichervorrichtung (14) der Station (10) einen Kondensator vom Typ Superkapazität (20) umfaßt.

3. Anlage nach Anspruch 1 oder 2, **dadurch gekennzeichnet, daß** die Verbindungsmittel (18) der Station (10) eine Sicherheitsvorrichtung umfassen, die geeignet ist, die Energieübertragung lediglich dann zu ermöglichen, wenn die Station (10) einwandfrei mit dem Fahrzeug (50) verbunden ist.

4. Anlage nach einem der Ansprüche 1 bis 3, **dadurch gekennzeichnet, daß** das Fahrzeug ferner Verbindungsmittel (56) umfaßt, die einen ausfahrbaren Arm umfassen, um sich mit den Verbindungsmitteln (18) der Aufladestation (10) zu verbinden.

5. Anlage nach Anspruch 4, **dadurch gekennzeichnet, daß** der ausfahrbare Arm mit einem elektrischen Verbinder (57) ausgestattet ist, der dazu bestimmt ist, mit einem elektrischen Verbinder (18), der zu den Verbindungsmitteln der Aufladestation gehört, zusammenzuwirken.

6. Anlage nach einem der Ansprüche 1 bis 5, **dadurch gekennzeichnet, daß** das Fahrzeug ferner Mittel zum Verbinden (56) mit der Aufladestation umfaßt und daß eine Kopplungsvorrichtung (64), die einen unidirektionalen Gleichstrom/Gleichstrom-Wandler vom Typ DC/DC-Zerhacker umfaßt, zwischen dem Kondensator des Fahrzeugs (58) und den Verbindungsmitteln (56) des Fahrzeugs angeordnet ist.

7. Elektrofahrzeug (50), umfassend Mittel zur Speicherung von elektrischer Energie (52), die einen Kondensator (58) umfassen, einen Elektromotor (54), der mit der in den Speichermitteln (52) gespeicherten Energie gespeist wird, wobei die Energiespeichermittel (52) dazu bestimmt sind, durch eine von dem Fahrzeug getrennte Aufladestation (10), die Verbindungsmittel (18) aufweist, aufgeladen zu werden, wobei das Fahrzeug (50) ferner Verbindungsmittel (56) umfaßt, um die Speichermittel (52) des Fahrzeugs (50) mit den Verbindungsmitteln (18) der Station (10) zu verbinden, wenn sich das Fahrzeug in der Nähe der Station (10) befindet, wobei das Fahrzeug **dadurch gekennzeichnet ist, daß** die Speichermittel (52) des Fahrzeugs (50) ferner einen Akkumulator (60) umfassen, der über eine reversible Vorrichtung zur Energieübertragung (62) mit dem Kondensator (58) verbunden ist, und daß der Kondensator des Fahrzeugs über eine Kopplungsvorrichtung (64), die einen unidirektionalen Gleichstrom/Gleichstrom-Wandler vom Typ DC/DC-Zerhacker umfaßt, mit den Verbindungsmitteln des Fahrzeugs verbunden ist.

8. Elektrofahrzeug nach Anspruch 7, **dadurch gekennzeichnet, daß** der Kondensator (56) des Fahrzeugs vom Typ Superkapazität ist.

9. Elektrofahrzeug nach Anspruch 7 oder 8, **dadurch gekennzeichnet, daß** der Kondensator (58) des Fahrzeugs (50) geeignet ist, den Akkumulator (60) aufzuladen.

10. Elektrofahrzeug nach einem der Ansprüche 7 bis 9, **dadurch gekennzeichnet, daß** die Verbindungsmittel einen auf dem Dach des Fahrzeugs angeordneten ausfahrbaren Arm (56) umfassen.

11. Elektrofahrzeug nach Anspruch 10, **dadurch gekennzeichnet, daß** der ausfahrbare Arm mit einem elektrischen Verbinder ausgestattet ist, um sich mit einem elektrischen Verbinder, der zu den Verbindungsmitteln (18) der Station (10) gehört, zu verbinden.

12. Elektrofahrzeug nach einem der Ansprüche 7 bis 11, **dadurch gekennzeichnet, daß** die Kapazität des Kondensators (56) im Bereich zwischen 20 und 50 Farad liegt.

13. Elektrofahrzeug nach einem der Ansprüche 7 bis 12, **dadurch gekennzeichnet, daß** der Kondensator vorgesehen ist, um zwischen 400 und 800 Volt zu arbeiten.
